# EUROPÄISCHE PATENTSCHRIFT

(11) **EP 3 569 052 B1**
(45) Veröffentlichungstag und Bekanntmachung des Hinweises auf die Patenterteilung: **26.02.2025**
(21) Anmeldenummer: 19162461.8
(22) Anmeldetag: 13.03.2019
(51) Int. Cl.: A01D 61/00, G06F 111/06

(54) **LANDWIRTSCHAFTLICHE ERNTEMASCHINE SOWIE VERFAHREN ZUR KONSTRUKTION EINES EINZUGSKANALS EINER SOLCHEN**
AGRICULTURAL HARVESTER AND METHOD FOR CONSTRUCTING AN INTAKE CHANNEL OF THE SAME
RÉCOLTEUSE AGRICOLE AINSI QUE PROCÉDÉ DE CONSTRUCTION D'UN CANAL D'ENTRÉE D'UNE TELLE RÉCOLTEUSE

(30) Priorität: 17.05.2018 DE 102018111912
(43) Veröffentlichungstag der Anmeldung: 20.11.2019
(73) Patentinhaber: CLAAS Selbstfahrende Erntemaschinen GmbH, 33428 Harsewinkel (DE)
(72) Erfinder: Niermann, Martin, 33428 Harsewinkel (DE); Holtmann, Bernd, 48324 Sendenhorst (DE); Steiner, Jens, 56269 Beckum (DE); Diekhaus, Stephen, 33659 Bielefeld (DE); Kortenjann, Ludger, 48231 Warendorf (DE); Arning, Anke, 48565 Steinfurt (DE)
(74) Vertreter: CLAAS 365FarmNet GmbH

(56) Entgegenhaltungen:
- WO-A1-2017/096259
- WO-A2-2007/076357
- DE-A1- 102016 118 637
- US-A- 3 973 380
- US-A1- 2011 137 443

## Beschreibung

Die vorliegende Anmeldung betrifft eine landwirtschaftliche Erntemaschine gemäß dem Oberbegriff von Anspruch 1. Ferner betrifft die vorliegende Anmeldung ein Verfahren zur Konstruktion eines Einzugskanals für eine landwirtschaftliche Erntemaschine gemäß Anspruch 14.

Die landwirtschaftliche Erntemaschine, die insbesondere von einem Mähdrescher gebildet sein kann, ist dazu geeignet, Pflanzen zu ernten, insbesondere Getreide wie Weizen oder Mais. Hierzu verfügt die Erntemaschine über mindestens ein Schneidorgan, mittels dessen die Pflanzen schneidbar sind. Das Schneidorgan kann beispielsweise von einem langgestreckten Messerbalken gebildet sein, bei dem ein feststehendes Untermesser und ein oszillierend hin und her schwingendes Obermesser zusammenwirken. Weiterhin verfügt die Erntemaschine über mindestens ein Förderorgan, mittels dessen die geschnittenen Pflanzen in Richtung eines Verarbeitungsorgans förderbar sind. Das Förderorgan umfasst mindestens einen Schrägförderer, mittels dessen die geschnittenen Pflanzen zum einen in Richtung nachgeschalteter Verarbeitungsorgane förderbar und zum anderen höhenmäßig anhebbar sind. Mithin verläuft der Schrägförderer "schräg" nach oben, wodurch sich sein Name ergibt.

Bei dem oder den Verarbeitungsorganen kann es sich grundsätzlich um jegliche Organe handeln, die dazu geeignet sind, die geschnittenen Pflanzen weiter zu verarbeiten. Am Beispiel eines Mähdreschers betrachtet ist mindestens ein Verarbeitungsorgan von einem Dreschorgan gebildet, mittels dessen Früchte der geschnittenen Pflanzen von Pflanzenresten ablösbar sind. Dem Dreschorgan nachgeschaltet verfügt ein Mähdrescher ferner typischerweise über mindestens ein Trennorgan, mittels dessen die abgelösten Früchte von den Pflanzenresten trennbar sind. Am Beispiel eines Feldhäckslers ist mindestens ein Verarbeitungsorgan von einem Häckselorgan gebildet, mittels dessen die geschnittenen Pflanzen häckselbar sind.

Der Schrägförderer weist mindestens einen Einzugskanal auf, durch den hindurch die geschnittenen Pflanzen förderbar sind. Hierzu verfügt der Einzugskanal über einen seitlich sowie nach oben und unten verschlossenen Förderraum, der an seinen einander gegenüberliegenden Stirnseiten geöffnet ist bzw. mindestens eine Öffnung aufweist. Hierdurch ist der Schrägförderer dazu hergerichtet, geschnittene Pflanzen ausgehend von einer - relativ zu einer Fahrrichtung der jeweiligen Erntemaschine betrachtet - vorderen offenen Stirnseite des Einzugskanals durch den Förderraum hindurch zu der jeweiligen hinteren offenen Stirnseite des Einzugskanals zu fördern.

Erntemaschinen der eingangs beschriebenen Art sind im Stand der Technik bereits bekannt. Hierzu wird beispielhaft auf die deutsche Offenlegungsschrift DE 10 2016 118 637 A1 verwiesen. Diese betrifft einen Mähdrescher, der mit einer Höhe der Haspel zur Zuführung der Pflanzen zu dem Schneidwerk ausgestattet ist.

Bei den bekannten Erntemaschinen ist der Einzugskanal des Schrägförderers aus Stahl hergestellt, wobei zur Verstärkung der Seitenwandungen Verstärkungsprofile angeordnet werden, die mit der eigentlichen Seitenwandung in Kraft übertragender Weise verbunden, insbesondere verschweißt, werden. Hierdurch wird dem Einzugskanal die notwendige Steifigkeit sowie Tragfähigkeit verliehen, um auf den Schrägförderer wirkende Kräfte in eine übergeordnete Tragstruktur der jeweiligen Erntemaschine abzuleiten. Es ist zu erläutern, dass ein jeweiliges Vorsatzgerät einer jeweiligen Erntemaschine, beispielsweise ein Schneidorgan, mitunter ausschließlich an dem Schrägförderer angeordnet ist, sodass durch das jeweilige Vorsatzgerät bedingte Lager- und Betriebskräfte mittels des Schrägförderers in die Tragstruktur der Erntemaschine abgeleitet werden müssen. Entsprechend ist der Schrägförderer insgesamt - und mithin vor allem dessen Einzugskanal - derart dimensioniert, dass er erhebliche Lager- sowie Betriebskräfte abtragen kann.

Bei den bekannten Erntemaschinen ist insbesondere der Schrägförderer demzufolge vergleichsweise massiv ausgestaltet, wobei ein hoher Materialbedarf sowie ein hoher Aufwand für die Montage erforderlich sind.

Der vorliegenden Anmeldung liegt mithin die Aufgabe zugrunde, eine Erntemaschine bereitzustellen, bei der der Schrägförderer effizienter konstruiert ist, ohne dass hierdurch die mechanischen Eigenschaften des Schrägförderers gemindert werden.

Die zugrunde liegende Aufgabe wird erfindungsgemäß mittels einer landwirtschaftlichen Erntemaschine mit den Merkmalen des Anspruchs 1 gelöst. Vorteilhafte Ausgestaltungen ergeben sich aus den Unteransprüchen 2 bis 15.

Bei der erfindungsgemäßen Erntemaschine ist mindestens eine Seitenwandung des Einzugskanals mit mindestens einer Verstärkungsstruktur versehen. Diese ist dadurch gekennzeichnet, dass im Bereich der Verstärkungsstruktur eine Wandstärke der jeweiligen Seitenwandung des Einzugskanals gegenüber Bereichen der Seitenwandung, die außerhalb der Verstärkungsstruktur liegen, erhöht ist. Die erhöhte Wandstärke hat unmittelbar zur Folge, dass im Bereich der Verstärkungsstruktur das axiale und das polare Flächenträgheitsmoment der Seitenwandung erhöht sind. Erfindungsgemäß ist ein Verlauf der mindestens einen Verstärkungsstruktur auf einem Ergebnis einer Topologieoptimierung basiert.

Eine solche Topologieoptimierung kann insbesondere mittels einer Finite-Elemente-Analyse durchgeführt werden. Eine Finite-Elemente-Analyse bzw. die Anwendung der Finite-Elemente-Methode sieht bei einem vorliegenden Gegenstand die Modellierung des Einzugskanals in einer Finite-Elemente-Software vor. Bei der erfindungsgemäßen Erntemaschine werden dafür bevorzugt zumindest eine Geometrie des Einzugskanals sowie dessen Lagerungsbedingungen vorgegeben. Weiterhin wird für den Einzugskanal mindestens ein Bemessungsbelastungszustand vorgegeben. Dieser kann beispielsweise eine Torsion des Einzugskanals abbilden, die durch ein an dem Einzugskanal angeordnetes Vorsatzgerät bedingt ist. Hierbei wird der Einzugskanal mit einem Kräftepaar beaufschlagt, das eine Torsion des Einzugskanals um dessen Längsachse bewirkt.

Im Rahmen der Finite-Elemente-Analyse wird der simulierte Einzugskanal in eine endliche Anzahl von flächigen oder räumlichen, beispielsweise linearen oder quadratischen, Elementen unterteilt, an deren Knoten die Lösung für das sich aus gegebenen Randbedingungen (Geometrie, Belastung, Lagerung) ergebende Gleichungssystem bestimmt wird. Hierbei handelt es sich um eine numerische Lösung, die Ergebnisse lediglich an den Knoten der Elemente ergibt, wobei zwischen den Knoten gewissermaßen eine Interpolation vorgenommen wird. Auf diese Weise lassen sich allgemein komplexeste Bauteile näherungsweise berechnen, das heißt insbesondere in dem Bauteil auftretende Verformungen, auftretende Dehnungen und/oder eine für die Dehnungen oder Verformungen aufzubringende Verformungsenergie etc. Im Rahmen der Topologieoptimierung wird dann über die Finite-Elemente-Analyse hinaus eine Zielfunktion unter einer mathematischen Randbedingung vorgegeben. Vorzugsweise ist die Zielfunktion bei dem Einzugskanal eine Maximierung der Steifigkeit unter der Randbedingung, dass die Masse des Einzugskanals um einen festzulegenden Faktor, insbesondere 70 % bis 90 %, verringert ist. Ergebnis der Topologieoptimierung ist eine Gewichtung der Elemente des Einzugskanals bezüglich dessen Steifigkeit.

Auf diese Weise sind folglich Bereiche des Einzugskanals ermittelbar, die für die Steifigkeit desselben von übergeordneter Bedeutung sind. Die mindestens eine Verstärkungsstruktur, vorzugsweise sämtliche Verstärkungsstrukturen, der erfindungsgemäßen Erntemaschine ist erfindungsgemäß basierend auf dem Ergebnis einer solchen Topologieoptimierung an dem Einzugskanal angeordnet, wobei sich die Verstärkungsstruktur(en) in solchen Bereichen des Einzugskanals befindet bzw. befinden, die hinsichtlich ihrer Relevanz betreffend die Steifigkeit des Einzugskanals von übergeordneter bzw. überdurchschnittlicher Bedeutung sind. Die Verstärkungsstruktur kann insbesondere in Form einer in sich geraden oder geschwungenen, langgestreckten Verdickung ausgeführt sein, die sich entlang einer Fläche einer jeweiligen Seitenwandung erstreckt.

Der Erfindung liegt die Überlegung zugrunde, dass der Schrägförderer insgesamt leichter und unter geringerem Materialeinsatz ausgeführt werden kann, wenn Bereiche des Einzugskanals, die für die beschriebene Lastabtragungswirkung sowie für die Bereitstellung der erforderlichen Steifigkeit von besonderer Bedeutung sind, gezielt verstärkt werden, während andere Bereiche des Einzugskanals, die diesbezüglich von untergeordneter Bedeutung sind, weniger massiv ausgestaltet werden. Bei geschickter Anordnung mindestens einer Verstärkungsstruktur, vorzugsweise einer Vielzahl entsprechender Verstärkungsstrukturen, kann die Masse des Schrägförderers um bis zu 30 % reduziert werden, ohne dass hiermit eine Verschlechterung seiner strukturellen Eigenschaften einhergeht. Für die "geschickte Anordnung" ist das Zugrundelegen des Ergebnisses einer vorstehend beschriebenen Topologieoptimierung von Bedeutung, mittels derer Bereiche des Einzugskanals ermittelbar sind, die für die Steifigkeit derselben von übergeordneter Bedeutung sind.

Aus praktischen Gründen ergibt sich dabei, dass das Ergebnis einer Topologieoptimierung typischerweise nicht vollständig in eine praktische Ausgestaltung des Schrägförderers, das heißt eine entsprechende Ausbildung von Verstärkungsstrukturen an dessen Einzugskanal, übertragbar ist, sondern vorteilhafterweise unter Gesichtspunkten der Herstellbarkeit und der Herstellungskosten anzupassen, vorzugsweise zu optimieren, ist. Mithin ist eine solche Ausgestaltung der erfindungsgemäßen Erntemaschine von besonderem Vorteil, bei der die mindestens eine Verstärkungsstruktur unter Gesichtspunkten der Herstellbarkeit und/oder Herstellungskosten optimiert ist. Dies ändert gleichwohl nichts daran, dass die Verstärkungsstruktur grundsätzlich vorteilhafterweise auf dem Ergebnis der Topologieoptimierung basiert.

Weiterhin ist eine solche Ausgestaltung der erfindungsgemäßen Erntemaschine von besonderem Vorteil, bei der der Verlauf bzw. die Anordnung der mindestens einen Verstärkungsstruktur, vorzugsweise sämtlicher Verstärkungsstrukturen, in Abhängigkeit sich ändernder bzw. verschiedener Belastungszustände optimiert ist. Ein jeweiliger Belastungszustand einer Erntemaschine ist zum einen durch Gewichtskräfte, die infolge Eigengewicht wirken, und zum anderen durch Betriebskräfte, die im Zuge des Betriebs der Erntemaschine auftreten, bedingt. Je nach Erntemaschine können die Gewichtskräfte zumindest im Wesentlichen konstant wirken oder sich verändern. Insbesondere bei Mähdreschern verändern sich die wirkenden Gewichtskräfte mit sich änderndem Füllstand des Korntanks. Zusätzlich können sich infolge Änderungen von Anbaugruppen, beispielsweise infolge der Verwendung verschiedener Vorsatzgeräte bei einem Mähdrescher, Unterschiede ergeben. Betriebskräfte können hingegen sehr unterschiedlich wirken und sind demzufolge bei der Optimierung des Schrägförderers schwieriger pauschal abzubilden. Es ist daher grundsätzlich vorteilhaft, verschiedene Belastungssituationen zu ermitteln und die Lage bzw. den Verlauf mindestens einer Verstärkungsstruktur, vorzugsweise sämtlicher Verstärkungsstrukturen, an dem Einzugskanal derart vorzusehen, dass letzterer hinsichtlich seiner Tragfähigkeit und Gebrauchstauglichkeit den unterschiedlichen Belastungszustände gewachsen ist. Demzufolge ist es von Vorteil, die Lage bzw. den Verlauf von Verstärkungsstrukturen nicht ausschließlich in Abhängigkeit einer einzigen Bemessungsbelastungssituation zu optimieren, da bei entsprechender Konfiguration die Steifigkeit des Einzugskanals bei veränderter Belastungssituation übermäßig viel schlechter ausfallen könnte, als dies beabsichtigt ist. Die Optimierung der Verstärkungsstrukturen in Abhängigkeit verschiedener Belastungszustände ist entsprechend von Vorteil.

In einer weiterhin vorteilhaften Ausgestaltung weist mindestens eine Verstärkungsstruktur, vorzugsweise eine Mehrzahl von Verstärkungsstrukturen, eine sich über eine Länge der jeweiligen Verstärkungsstruktur verändernde Breite und/oder verändernde Höhe auf. Die Änderung der Breite bzw. der Höhe der jeweiligen Verstärkungsstruktur erfolgt vorteilhafterweise stetig, das heißt sprungfrei. Insbesondere bei langgestreckten Verstärkungsstrukturen kann mittels Veränderung der Höhe und/oder der Breite einer Verstärkungsstruktur kann gezielt eine Anpassung der Verstärkungsstrukturen auf die bereichsweise vorliegenden Anforderungen an den Einzugskanal vorgenommen werden. Mithin erschöpft sich die Optimierung des Einzugskanals nicht lediglich darin, in bestimmten Bereichen Verstärkungsstrukturen vorzusehen, während andere Bereiche frei von Verstärkungsstrukturen bleiben. Zusätzlich werden die Verstärkungsstrukturen gewissermaßen in ihrer Ausprägung variiert, sodass gezielt in Bereichen, die für die Steifigkeit des Einzugskanals von übermäßiger Bedeutung sind, eine jeweilige Verstärkungsstruktur "größer" gestaltet ist, während in anderen Bereichen geringere Abmessungen der betroffenen Verstärkungsstruktur genügen, um eine gewünschte lokale Steifigkeit des Einzugskanals herzustellen.

In einer vorteilhaften Ausgestaltung der erfindungsgemäßen Erntemaschine ist die mindestens eine Verstärkungsstruktur des Einzugskanals zumindest bereichsweise, vorzugsweise vollständig, mehrschichtig ausgebildet. Insbesondere ist eine Ausgestaltung denkbar, bei der der Einzugskanal zweischichtig ausgebildet ist. Die einzelnen Schichten sind dabei in Kraft übertragender Weise miteinander verbunden, beispielsweise miteinander verschweißt oder verklebt; sie können insbesondere von Blechen gebildet sein. Vorteilhafterweise gewährt die Verbindung der Schichten auch die Übertragung von Schubkräften, sodass eine Schubsteifigkeit gegeben ist. Auf diese Weise sind Verstärkungsstrukturen besonders einfach herstellbar. Somit ist es denkbar, dass der Einzugskanal bzw. dessen Seitenwandungen allgemein von einem ersten Blech gebildet sind, während gezielt eingesetzte Verstärkungsstrukturen jeweils mittels eines zweiten Blechs ausgebildet sind, das bereichsweise an das erste Blech des Einzugskanals angeschlossen und in Kraft übertragender Weise mit dem ersten Blech verbunden ist. Vorteilhafterweise wirken die Schichten des Einzugskanals derart in Kraft übertragender Weise zusammen, dass sie in mechanischer Hinsicht einen einteiligen Querschnitt ausbilden.

Das zweite Blech, das in Bereichen der Verstärkungsstrukturen angeordnet ist, kann insbesondere geprägt ausgebildet sein, sodass es von einer vollständig planen Ausgestaltung abweicht und stattdessen eine dreidimensionale Struktur bzw. ein Relief aufweist. Die geprägten Bereiche des zweiten Blechs bilden sodann die eigentliche Verstärkungsstruktur, die die eingangs beschriebene "Verdickung" der jeweiligen Seitenwandung des Einzugskanals bewirkt. Letztere bewirkt wiederum mechanisch eine Versteifung des Einzugskanals insgesamt, da das Flächenträgheitsmoment des Einzugskanals in Bereichen der Verstärkungsstrukturen deutlich erhöht ist. Das geprägte zweite Blech und das zugehörige plane Blech wirken in mechanischer Hinsicht als ein geschlossener Querschnitt.

Ein besonderer Vorteil der mehrschichtigen Ausgestaltung besteht zudem darin, dass eine äußere Schicht der Karosserie frei von Fügeverbindungen wie zum Beispiel Schweißnähten ausgebildet werden kann. Dies ist insbesondere dann von Vorteil, wenn die äußere Schicht die Verstärkungsstruktur bildet. Letztere ist dann besonders robust und wenig anfällig für infolge einer etwaigen Fügeverbindung vorliegende Defekte.

Die erfindungsgemäße Erntemaschine weiter ausgestaltend ist der Einzugskanal derart ausgebildet, dass zumindest zwei seiner Seitenwandungen unter Ausbildung einer Kante aneinander grenzen. Vorzugsweise grenzen die Seitenwandungen umlaufend aneinander, sodass sich die vorstehend beschriebene Kanalform ergibt, bei der ein Förderraum von zwei sich gegenüberliebenden Seiten sowie einem Boden und einer Decke gebildet ist, die jeweils angrenzend miteinander verbunden sind. Bei einer solchen Ausgestaltung ist es besonders vorteilhaft, wenn mindestens eine Verstärkungsstruktur an der Kante von einer Seitenwandung auf eine jeweils angrenzende Seitenwandung umschlägt bzw. um die Kante herum verläuft, wobei die Verstärkungsstruktur vorzugsweise an der Kante nach außen vorstehend ausgebildet ist. Mit anderen Worten ist eine solche Ausgestaltung vorteilhaft, bei der die Verstärkungsstruktur nicht als solche an der Kante einer der Seitenwandungen endet und sodann ausgehend von der Kante an der angrenzenden Seitenwandung neu ansetzt, sondern die Verstärkungsstruktur als solche um die Kante umschlägt und somit auch im Bereich der Kante selbst eine Erhöhung der Wandstärke des Einzugskanals bewirkt. Mittels einer solchen Ausgestaltung sind mittels der jeweiligen Verstärkungsstruktur geführte Kräfte besonders gut von einer der Seitenwandungen auf die angrenzende Seitenwandung überführbar.

Besonders bevorzugt ist dabei eine solche Ausgestaltung, bei der mindestens eine Verstärkungsstruktur in Form einer Lagerversteifung ausgebildet ist. Diese ist dadurch gekennzeichnet, dass sie in einem Lagerbereich des Einzugskanals angeordnet ist, an dem der Einzugskanal bzw. der Schrägförderer insgesamt an eine übergeordnete Tragstruktur der jeweiligen Erntemaschine angeschlossen ist. Mithin werden auf den Schrägförderer einwirkende Kräfte an einem Lager beispielsweise in eine Karosserie der jeweiligen Erntemaschine eingeleitet, wobei ein dieses Lager umgebender Bereich als "Lagerbereich" im Sinne der vorliegenden Anmeldung zu verstehen ist. Dieser Lagerbereich ist typischerweise besonders stark belastet, da sämtliche auf den Schrägförderer wirkenden Kräfte über dessen Lager in die übergeordnete Tragstruktur abgeführt werden müssen, wobei eine Aufteilung auf mindestens zwei symmetrisch an dem Schrägförderer angeordnete Lager üblich ist. Aufgrund der hohen mechanischen Belastung ist der Lagerbereich typischerweise derjenige, an bzw. in dem die größten Verformungen zu erwarten sind, sobald der Schrägförderer mit entsprechenden Kräften belastet ist. Die Anordnung einer Verstärkungsstruktur in Form der genannten Lagerversteifung trägt dazu bei, derartige Verformungen gezielt zu verringern, indem eine Steifigkeit im Lagerbereich mittels der Lagerversteifung erhöht wird.

Vorteilhafterweise ist die Lagerversteifung dabei derart ausgebildet, dass sie von einer Seitenwandung des Einzugskanals, insbesondere der Bodenwandung, auf die angrenzende Seitenwandung umschlägt, an der das Lager unmittelbar ausgebildet ist. Auf diese Weise ist ein Kraftfluss von einer jeweiligen Seitenwandung, die nicht unmittelbar mit dem Lager zusammenwirkt, auf diejenige Seitenwandung, die mit dem Lager unmittelbar zusammenwirkt, verbessert. Eine Verformung des Einzugskanals im Bereich der jeweiligen Kante, an der die Lagerversteifung umschlägt, ist folglich reduziert.

Bezugnehmend auf die vorstehende Ausführungsform, bei der mindestens eine Seitenwandung im Bereich mindestens einer Verstärkungsstruktur mehrschichtig ausgebildet ist, kann es weiterhin von besonderem Vorteil sein, wenn die Lagerversteifung von einem geprägten Blech gebildet ist, das gemeinsam mit einem weiteren Blech in Kraft übertragender Weise verbunden, beispielsweise verschweißt oder verklebt, ist. Auf diese Weise ist der Einzugskanal im Bereich der Lagerversteifung zumindest zweischichtig ausgebildet, wobei vorzugsweise eine innenliegende Schicht von einem ebenen bzw. planen Blech und die außenliegende Schicht von dem geprägten Blech gebildet sind. Die ebene Ausgestaltung der innenliegenden Schicht, die dem Förderraum des Einzugskanals zugewandt ist, bietet dabei den Vorteil, dass ein Fluss von geschnittenen Pflanzen durch den Förderraum hindurch möglichst wenig durch in den Förderraum hineinragende Hindernisse gestört ist.

Erfindungsgemäss ist, wenn mindestens eine an der unteren Bodenwandung angeordnete Verstärkungsstruktur in einem Mittelbereich der Bodenwandung in Form einer in sich geschlossenen Ringstruktur gebildet ist. Diese Ringstruktur fasst den Mittelbereich in sich geschlossen ein und ist besonders gut geeignet, die Steifigkeit der Bodenwandung zu erhöhen. In einer vorteilhaften Ausgestaltung umfasst die Bodenwandung zudem mindestens eine Verstärkungsstruktur, die in Form einer Radialstruktur ausgebildet ist. Diese erstreckt sich ausgehend von der genannten Ringstruktur radial nach außen, wobei der Einzugskanal vorzugsweise mindestens vier Radialstrukturen aufweist, die sich jeweils ausgehend von der Ringstruktur in Richtung jeweils einer Ecke der Bodenwandung erstrecken. Somit weist die Bodenwandung in bevorzugter Weise gewissermaßen eine Art Sternmuster auf, bei dem mittig in dem Mittelbereich die in sich geschlossene Ringstruktur sowie ausgehend von der Ringstruktur radial ausgehende Radialstrukturen vorhanden sind.

Weiter bevorzugt ist eine Ausgestaltung, bei der mindestens eine Verstärkungsstruktur an der Bodenwandung in Form einer randseitig umlaufenden Randstruktur gebildet ist. Diese fast gewissermaßen die Bodenwandung außenseitig ein.

Die zugrunde liegende Aufgabe wird ferner mittels eines Verfahrens zur Konstruktion eines Einzugskanals mit den Verfahrensschritten Anspruchs 16 gelöst. Eine vorteilhafte Ausgestaltung des Verfahrens ergibt sich aus dem Unteranspruchs 17.

Das erfindungsgemäße Verfahren umfasst die folgenden Verfahrensschritte:
a) Es wird ein virtuelles Modell des Einzugskanals erstellt, wobei der Einzugskanal eine Mehrzahl von Seitenwandungen aufweist, die einen Förderraum des Einzugskanals umlaufend einfassen.
b) Dem virtuellen Modell werden mindestens ein Bemessungsbelastungszustand sowie Lagerungsbedingungen vorgegeben.
c) An dem Modell wird unter dem Bemessungsbelastungszustand sowie den Lagerungsbedingungen eine Topologieoptimierung durchgeführt.
d) Basierend auf dem Ergebnis der Topologieoptimierung werden an dem Einzugskanal Verstärkungsstrukturen angeordnet.

Das "virtuelle Modell" kann insbesondere ein CAD-Modell sein, das mittels einer Bemessungssoftware verarbeitbar ist. In besonders vorteilhafter Weise kann das virtuelle Modell unter Verwendung einer Finite-Elemente-Software erstellt werden, sodass das Modell unmittelbar mittels besagter Software berechenbar ist. Mittels einer solchen Finite-Elemente-Software kann besonders einfach eine Topologieoptimierung durchgeführt werden. Dies ist vorstehend bereits ausgeführt.

Der Bemessungsbelastungszustand, der dem virtuellen Modell vorgegeben wird, kann verschiedenartig ausgebildet sein, wobei in vorteilhafterweise das Verfahren iterativ gestaltet ist. Hierbei wird eine Mehrzahl von Bemessungen durchgeführt, denen jeweils ein anderer Bemessungsbelastungszustand zugrunde gelegt wird.

Die erfindungsgemäße Erntemaschine bzw. deren Schrägförderer ist mittels des erfindungsgemäßen Verfahrens besonders einfach konstruierbar. Die sich hieraus ergebenden Vorteile sind vorstehend bereits dargelegt. Insbesondere ist es unter Anwendung der Topologieoptimierung möglich, an dem Einzugskanal des Schrägförderers Verstärkungsstrukturen auf eine Art und Weise anzuordnen, die es erlaubt, die Steifigkeit und Tragfähigkeit des Einzugskanals gegenüber einem solchen gemäß herkömmlicher Bauweise beizubehalten, während die Masse des Einzugskanals und insbesondere der zu dessen Herstellung erforderlichen Materialaufwand reduziert werden.

In einer bevorzugten Ausführungsform wird die Topologieoptimierung mittels einer Finite-Elemente-Analyse durchgeführt, wobei vorzugsweise der Topologieoptimierung als Zielfunktion eine Maximierung der Steifigkeit des Einzugskanals vorgegeben wird unter der Randbedingung, dass eine Masse des Einzugskanals um einen festgelegten Faktor verringert ist. Vorzugsweise beinhaltet die Randbedingung, dass die Masse des Einzugskanals um 70 % bis 90 % verringert ist.

Vorteilhafterweise wird das erfindungsgemäße Verfahren auf die folgende Weise durchgeführt:
i) Es wird ein virtuelles Modell des Einzugskanals erstellt, wobei der Einzugskanal eine Mehrzahl von Seitenwandungen aufweist, die einen Förderraum des Einzugskanals umlaufend einfassen.
ii) Dem virtuellen Modell werden mindestens ein Bemessungsbelastungszustand sowie Lagerungsbedingungen vorgegeben.
iii) An dem Modell wird unter dem Bemessungsbelastungszustand sowie den Lagerungsbedingungen eine Topologieoptimierung durchgeführt.
iv) Basierend auf dem Ergebnis der Topologieoptimierung werden an dem Einzugskanal Verstärkungsstrukturen angeordnet.
v) Die Anordnung der Verstärkungsstrukturen wird unter Berücksichtigung der Herstellbarkeit und verschiedener Bemessungsbelastungszustände optimiert.
vi) Zumindest eine Seitenwandung des Einzugskanals wird doppelschichtig ausgeführt, wobei eine erste Schicht von einem planen Blech und die zweite Schicht von einem geprägten Blech gebildet sind, wobei die beiden Schichten in Kraft übertragender Weise miteinander verbunden werden.

Die erfindungsgemäße Erntemaschine sowie das erfindungsgemäße Verfahren sind nachstehend anhand eines Ausführungsbeispiels, das in den Figuren dargestellt ist, näher erläutert. Es zeigt:
- Fig. 1:: Einen Querschnitt durch eine landwirtschaftliche Erntemaschine, die hier von einem Mähdrescher gebildet ist,
- Fig. 2:: Eine perspektivische Ansicht eines Schrägförderers gemäß dem Stand der Technik,
- Fig. 3:: Eine perspektivische Ansicht eines Ergebnismodells eines Einzugskanals einer erfindungsgemäßen Erntemaschine, dass das Ergebnis einer Topologieoptimierung darstellt,
- Fig. 4:: Eine perspektivische Ansicht eines erfindungsgemäßen Schrägförderers, wobei sich der Einzugskanal in einen Zwischenzustand seiner Herstellung befindet,
- Fig. 5:: Die perspektivische Ansicht gemäß Figur 4, wobei sich der Einzugskanal in einen fertig gestellten Zustand befindet, und
- Fig. 6:: Einen schematischen Querschnitt durch eine untere Bodenwandung des Einzugskanals gemäß Figur 5 in einem Mittelbereich.

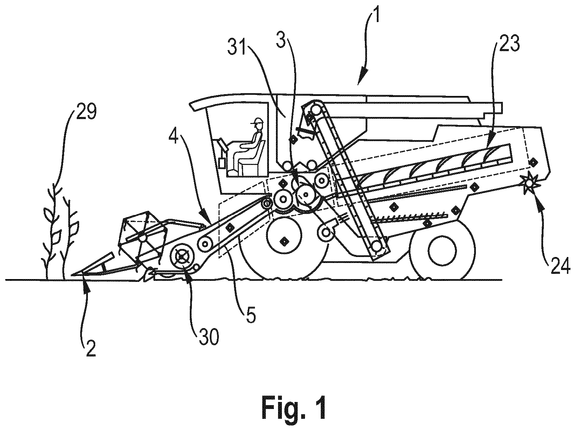

Das Ausführungsbeispiel zu der vorliegenden Erfindung wird nachstehend im Zusammenhang mit einer Erntemaschine **1** erläutert, die hier von einem Mähdrescher gebildet ist. Die Erntemaschine **1** ist in **Figur 1** in einem Querschnitt dargestellt. Die Erntemaschine **1** verfügt an seinem vorderen Ende über ein Schneidorgan **2,** das hier einen Messerbalken umfasst. Mittels des Schneidorgans **2** sind Pflanzen **29** schneidbar, sodass sie mittels der Erntemaschine **1** verarbeitet werden können. Hierzu werden die geschnittenen Pflanzen mittels einer Einzugswalze **30** in Richtung eines Schrägförderers **4** befördert, mittels dessen die geschnittenen Pflanzen weiter in Richtung eines Verarbeitungsorgans **3** befördert werden können. Letzteres ist hier von einem Dreschorgan gebildet, mittels dessen Früchte der geschnittenen Pflanzen von übrigen Pflanzenresten ablösbar sind. An das Verarbeitungsorgan **3** anschließend wird ein Gemisch aus abgelösten Früchten und Pflanzenresten an ein Trennorgan **23** weitergeleitet, das hier von einem Trennrotor gebildet ist. Mittels dieses Trennrotors werden die abgelösten Früchte von den Pflanzenresten getrennt, sodass die Früchte schließlich in einem Korntank **31** gesammelt werden können, während die Pflanzenreste an einem rückwärtigen Ende des Mähdreschers **1** ausgeworfen werden. Die gezeigte Erntemaschine **1** verfügt hierbei über ein weiteres Verarbeitungsorgan in Form eines Häckselorgans **24,** mittels dessen die Pflanzenreste häckselbar sind, wodurch deren Zersetzung und Wiederaufnahme der Nährstoffe in den Untergrund verbessert wird.

Der Schrägförderer **4** des Mähdreschers **1** umfasst einen Einzugskanal **5,** durch den hindurch die geschnittenen Pflanzen in Richtung des Verarbeitungsorgans **3** förderbar sind. Innerhalb des Einzugskanals **5** ist eine Mehrzahl von an Riemen geführter Förderbalken angeordnet, die mittels zweier Walzen umlaufend in dem Einzugskanal **5** antreibbar sind. Die Förderbalken sind dazu geeignet, in einen Einzugsbereich des Schrägförderers **4** gelangende Pflanzen zu erfassen und schließlich durch den Einzugskanal **5** hindurch schräg nach oben gerichtet in Richtung des Verarbeitungsorgans **3** zu befördern. Der Einzugskanal **5** als solcher ist von insgesamt vier Seitenwandungen **6** umgeben, von denen zwei seitlich gewissermaßen links und rechts, sowie jeweils eine unten und oben angeordnet sind. Mit anderen Worten ist der Einzugskanal von zwei einander gegenüberliegenden Seiten sowie einer unseren Bodenwandung **17** und einer oberen Deckenwandung gebildet. An seinen verbleibenden zwei Seiten, nämlich seinen einander gegenüberliegenden Stirnseiten **8, 9,** ist der Einzugskanal **5** geöffnet ausgeführt, sodass die geschnittenen Pflanzen in einen inneren Förderraum des Einzugskanals **5** einbringbar und an dem gegenüberliegenden Ende des Einzugskanals **5** wieder aus selbigem ausbringbar sind.

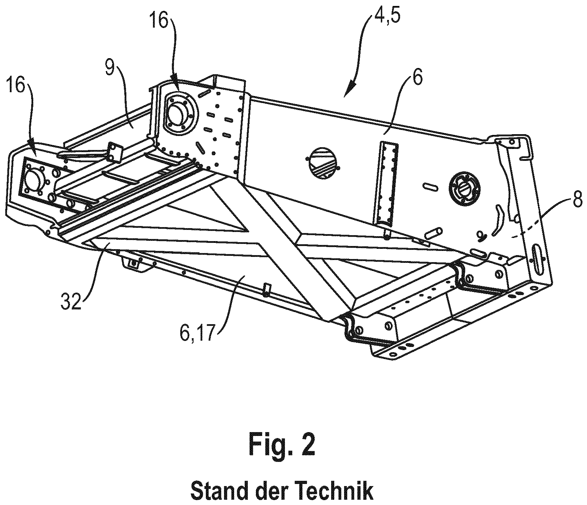

Ein Schrägförderer **4** gemäß dem Stand der Technik ist beispielhaft in einer perspektivischen Ansicht in **Figur 2** dargestellt. Hierbei ist der Einzugskanal **5** des Schrägförderers **4** von einer schräg unteren Perspektive aus erkennbar, sodass die untere Bodenwandung **17** sichtbar ist. Zudem sind die geöffnet ausgeführte hintere Stirnseiten **9** sowie eine seitliche Seitenwandung **6** erkennbar. Der Einzugskanal **5** ist in bekannter Weise von seiner vorderen Stirnseite **8** aus betrachtet konisch zulaufend in Richtung seiner hinteren Stirnseiten **9** ausgebildet. An einer Unterseite des Einzugskanals **5** ist selbiger mit zwei einander kreuzenden, diagonal verlaufenden Verstärkungsprofilen **32** ausgestattet, die von rechteckigen Stahlprofilen gebildet sind. Diese Verstärkungsprofile **32** dienen dazu, den Schrägförderer **4** insgesamt zu verstärken und auf diese Weise eine Eignung des Schrägförderers **4** zur Ableitung von Lasten in eine übergeordnete Tragstruktur des Mähdreschers **1** zu erreichen. Der Schrägförderer **4** ist an Lagerbereichen **16** in Kraft übertragender Weise an einer solchen in **Figur 2** nicht dargestellten übergeordneten Tragstruktur des Mähdreschers **1** befestigt. In dem gezeigten Beispiel werden sämtliche auf den Schrägförderer **4** wirkende Lasten über die Lagerbereiche **16** in die Erntemaschine **1** eingeleitet. Dies betrifft auch solche Lasten, die durch ein jeweiliges Vorsatzgerät bedingt sind, das an den Schrägförderer **4** angeschlossen ist. In dem gezeigten Beispiel gemäß **Figur 1** sind daher sämtliche Lasten, die durch das Schneidorgan **2** bedingt sind, über den Schrägförderer **4** abzutragen. Entsprechend ergibt es sich, dass die Anforderungen an die Steifigkeit und Tragfähigkeit des Schrägförderers **4** vergleichsweise hoch sind.

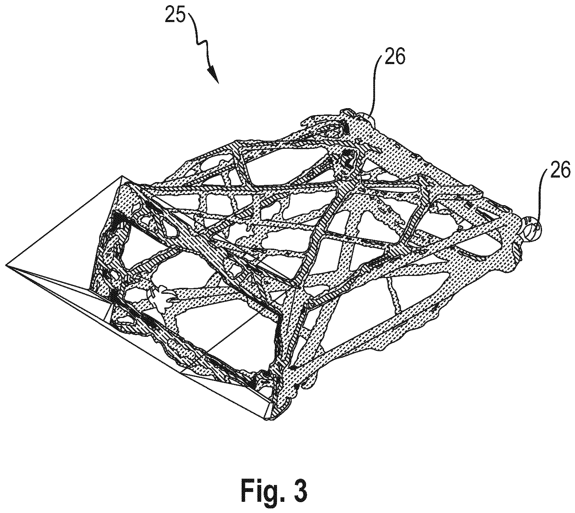

Zwecks effizienterer Konstruktion des Schrägförderers **4** bzw. seines Einzugskanals **5** wird erfindungsgemäß vorgeschlagen, den Einzugskanal **5** mittels eines in den Figuren nicht dargestellten Modells zu simulieren, wobei insbesondere die Seitenwandungen **6** des Einzugskanals **5** abgebildet werden. An diesem Modell werden sodann virtuell Lagerungsbedingungen definiert und es wird mindestens ein Bemessungsbelastungszustand aufgegeben. Unter diesen Vorgaben wird an dem Modell eine Topologieoptimierung durchgeführt, wobei hier der Topologieoptimierung als Zielfunktion eine Maximierung der Steifigkeit des Einzugskanals vorgegeben wird unter der Randbedingung, dass eine Masse des Einzugskanals um einen festgelegten Faktor verringert wird. Dieser festgelegte Faktor kann beispielsweise 80 % betragen. Das Ergebnis einer solchen Topologieoptimierung ist beispielhaft in **Figur 3** anhand eines Ergebnismodells **25** erkennbar. Dieses Ergebnis wurde mit den Mitteln einer Finite-Elemente-Analyse ermittelt. Insbesondere sind zwei Lager **26** erkennbar die an dem modellierten Einzugskanal **5** abgebildet sind. Die gerippeartige Struktur des Ergebnismodells **25** verdeutlicht diejenigen Bereiche des Einzugskanals **5,** die hinsichtlich seiner Steifigkeit von übergeordneter Bedeutung sind. Die Topologieoptimierung wurde in dem gezeigten Beispiel an einer Mehrzahl von Bemessungsbelastungszuständen durchgeführt, wobei die Ergebnisse jeweils zumindest leicht unterschiedliche Bereiche kenntlich gemacht haben, die für die Steifigkeit des Einzugskanals **5** von übergeordneter Bedeutung sind.

Die Konstruktion des tatsächlichen Einzugskanals **5** der erfindungsgemäßen Erntemaschine **1** basiert nunmehr auf einer solchen Topologieoptimierung bzw. deren Ergebnis, wobei erfindungsgemäß Verstärkungsstrukturen **10,** mittels derer der Einzugskanal **5** versteift ist, basierend auf dem Ergebnis der Topologieoptimierung angeordnet sind. Dabei wird das hier beispielhaft in **Figur 3** gezeigte Ergebnis unter Gesichtspunkten der Herstellbarkeit und der Herstellungskosten optimiert, sodass sich Verstärkungsstrukturen **10** ergeben, die in Bereichen des Einzugskanals **5** angeordnet sind, die überdurchschnittlich ausschlaggebend für die Steifigkeit des fertigen Einzugskanals **5** sind und die sind für die Praxis relevanter Weise herstellbar sind.

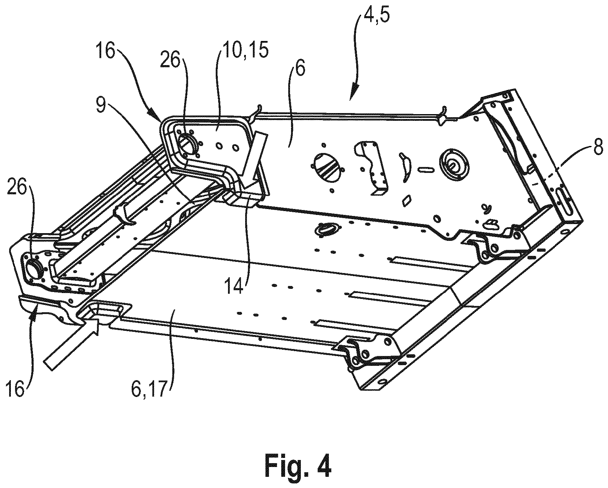

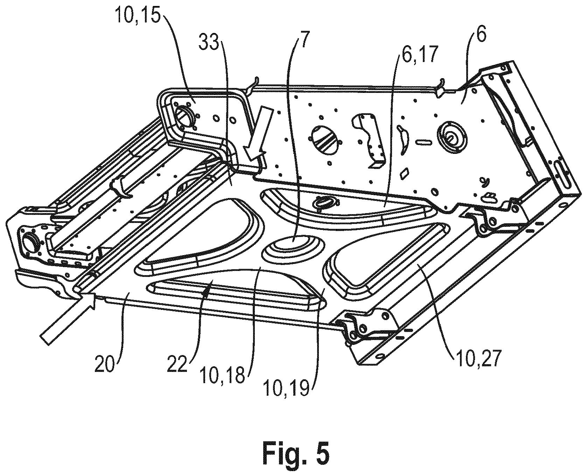

Ein Schrägförderer **4** mit einem Einzugskanal **5** einer erfindungsgemäßen Erntemaschine 1 ist besonders gut anhand der **Figuren 4** **und** **5** erkennbar. In beiden Figuren ist der Schrägförderer **4** in einer perspektivischen Ansicht von unten vergleichbar zu der Darstellung gemäß **Figur 2** dargestellt, sodass insbesondere die untere Bodenwandung **17** des Einzugskanals 5 sichtbar ist. In besonders vorteilhafter Weise ist der Einzugskanal **5** mehrschichtig ausgebildet, wobei eine innere Schicht **12,** die effektiv die Seitenwandungen **6** des Einzugskanals **5** bilden, von einem ebenen Blech gebildet ist. Auf diese Weise wird insbesondere erreicht, dass Innenseiten der Seitenwandungen **6** möglichst glatt ausgeführt sind, sodass eine Führung von Pflanzenresten durch den Förderraum möglichst frei von Widerständen ist. Weiterhin umfasst der Einzugskanal **5** in Bereichen von Verstärkungsstrukturen **10** eine zweite Schicht **13,** die jeweils von einem geprägten Blech gebildet ist. Die Prägung des Blechs führt dazu, dass selbiges gewissermaßen eine dreidimensionale Struktur aufweist und aus seiner Blechebene hinaus vorsteht. Diese geprägte Ausführung trägt maßgeblich zur Versteifungswirkung der zweiten Schicht **13** bei, sodass sie als Verstärkungsstruktur **10** geeignet ist. Insbesondere bewirkt die zweite Schicht eine Erhöhung des polaren und des axialen Flächenträgheitsmoments der jeweiligen Seitenwand **6.**

In dem gezeigten Beispiel gemäß den **Figuren 4** **und** **5** ist insbesondere erkennbar, dass die beiden einander gegenüberliegenden Lagerbereiche **16** jeweils mit einer Verstärkungsstruktur **10** zusammenwirken, die hier in Form von Lagerversteifungen **15** ausgebildet sind. Bei diesen Lagerversteifungen **15** handelt es sich um einteilige Elemente, die die "zweite Schicht" des Einzugskanals **5** bilden. Die Lagerversteifungen **15** werden in Kraft übertragender Weise der inneren ersten Schicht verbunden, beispielsweise mittels Punktschweißen, Kleben oder Punktschweißkleben. Auf diese Weise können die beiden Schichten **12, 13** mechanisch zusammenwirken, sodass sich schließlich lokal im Bereich der Lagerversteifung **15** ein erheblich erhöhtes Flächenträgheitsmoment ergibt. Insbesondere können die Schichten **12, 13** in mechanischer Hinsicht wie ein in sich geschlossener Querschnitt wirken.

In besonders vorteilhafter Weise ist die Lagerversteifung **15** an einer unteren Kante **14** des Einzugskanals **5,** an dem die seitliche Seitenwandung **6** und die untere Seitenwandung **6** (Bodenwandung **17)** aneinander grenzen derart umgeschlagen, dass die Lagerversteifung **15** sowohl an der seitlichen Seitenwandung **6** als auch an der unteren Seitenwandung **6** ausgebildet ist. Hierbei ist von Bedeutung, dass die nach außen vorstehende Form der Lagerversteifung **15** auch im Bereich der Kante **14** beibehalten ist, sodass die erzielte Versteifung nicht nur flächig an den Seitenwandungen **6** sondern auch unmittelbar an der Kante **14** bzw. umlaufend um die Kante **14** wirkt. Auf diese Weise ist ein Kraftfluss in Richtung der Lager **26** bzw. der Lagerbereiche **16** von der unteren Bodenwandung **17** aus hin zu der seitlichen Seitenwandung **6** verbessert. Dies betrifft insbesondere einen solchen Kraftfluss, der sich infolge einer Belastung des Einzugskanals **5** mit einem Torsionsmoment um dessen Längsachse einstellt. Die Darstellung gemäß **Figur 4** stellt einen Zwischenschritt in der Herstellung des fertigen Einzugskanals **5** dar, in dem zunächst die Lagerversteifungen **15** aufgebracht und in der beschriebenen Weise um die jeweilige Kante **14** herum zu der unteren Bodenwandung **17** geführt sind.

In einem dem nachfolgenden Fertigungsschritt wird die untere Bodenwandung **17** als solche mit Verstärkungsstrukturen **10** ausgestattet. In dem gezeigten Beispiel wird hierzu ein einteiliges geprägtes Blech auf die untere Bodenwandung **17** aufgebracht, wobei besagtes Blech verschiedene Verstärkungsstrukturen **10** beinhaltet. Eine erste Verstärkungsstruktur **10** ist hier von einer in sich geschlossenen Ringstruktur **18** gebildet, die einen Mittelbereich **7** der Bodenwandung **17** einschließt. Ausgehend von der Ringstruktur **18** erstrecken sich insgesamt vier weitere Verstärkungsstrukturen **10,** die in Form von Radialstrukturen **19** ausgebildet sind. Die Radialstrukturen **19** erstrecken sich in Richtung jeweils einer Ecke **20** der Bodenwandung **17,** sodass sich an der Bodenwandung **17** zwei Hauptdiagonalen ergeben, die an der inneren Ringstruktur **18** zusammengeführt sind. Außen umlaufend, gewissermaßen die Bodenwandung **17** einfassend, ist schließlich eine äußere Randstruktur **27** ausgebildet. Das geprägte Blech, das auf diese Weise die Verstärkungsstrukturen **10** der unteren Bodenwandung **17** vereint, wird als solches in Kraft übertragender Weise mit der unteren Bodenwandung **10** verbunden, wobei zudem eine kraftübertragende Verbindung mit den Lagerversteifungen **15** hergestellt wird, insbesondere mittels Verkleben. Dies ergibt sich aus **Figur 5**, anhand derer erkennbar ist, dass das geprägte Blech der unteren Bodenwandung **17** mit dem geprägten Blech der Lagerversteifung **15** einen Überlappungsbereich **33** ausbildet. Um einen Kraftfluss zwischen den Verstärkungsstrukturen **10** zu verbessern, sind diese als solche gleichermaßen in Kraft übertragender Weise miteinander verbunden, insbesondere miteinander verklebt oder verschweißt.

Die übrigen Seitenwandungen **6** des Einzugskanals **5** können in gleicher Weise mit Verstärkungsstrukturen **10** versehen werden, die auf dem Ergebnis einer Topologieoptimierung basieren.

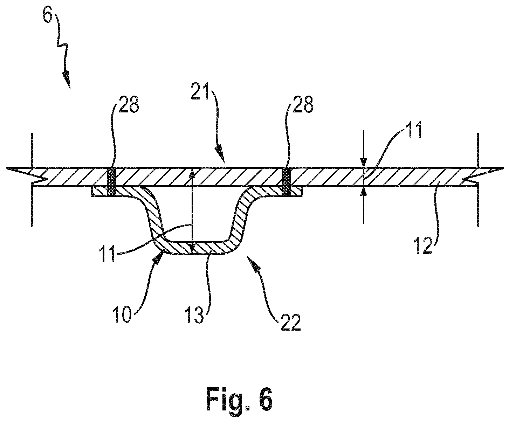

Zur Veranschaulichung des Aufbaus ist in **Figur 6** eine mit Verstärkungsstrukturen **10** ausgestattete Seitenwandung **6** schematisch in einem Querschnitt dargestellt. Die Seitenwandung **6** als solche ist von einem planen Blech gebildet, dessen Innenseite **21** zumindest im Wesentlichen eben ist. Außenliegend, das heißt auf einer einem Förderraum des Einzugskanals **5** abgewandten Seite, wirkt dieses ebene Blech mit einem zweiten, geprägten Blech zusammen, mittels dessen die Verstärkungsstrukturen **10** ausgebildet sind. Die beiden Bleche, die zwei Schichten **12, 13** der Seitenwandung **6** darstellen, sind in dem gezeigten Beispiel in Kraft übertragender Weise mittels Punktschweißklebungen **28** miteinander verbunden. Es ergibt sich, dass eine Wandstärke **11** der Seitenwandung **6** in Bereichen außerhalb der Verstärkungsstrukturen **10** geringer ist als eine Wandstärke **11** in Bereichen der Verstärkungsstrukturen **10.** Die erhöhte Wandstärke **11** in Bereichen der Verstärkungsstrukturen **10** führen zu einem erhöhten axialen und polaren Flächenträgheitsmoment der jeweiligen Seitenwandung **6.**

### Bezugszeichenliste

- 1: Erntemaschine
- 2: Schneidorgan
- 3: Verarbeitungsorgan
- 4: Schrägförderer
- 5: Einzugskanal
- 6: Seitenwandung
- 7: Mittelbereich
- 8: Stirnseite
- 9: Stirnseite
- 10: Verstärkungsstruktur
- 11: Wandstärke
- 12: Schicht
- 13: Schicht
- 14: Kante
- 15: Lagerversteifung
- 16: Lagerbereich
- 17: Bodenwandung
- 18: Ringstruktur
- 19: Radialstruktur
- 20: Ecke
- 21: Innenseite
- 22: Außenseite
- 23: Trennorgan
- 24: Häckselorgan
- 25: Ergebnismodell
- 26: Lager
- 27: Randstruktur
- 28: Punktschweißung
- 29: Pflanze
- 30: Einzugswalze
- 31: Korntank
- 32: Verstärkungsprofil
- 33: Überlappungsbereich

## Patentansprüche

1. Landwirtschaftliche Erntemaschine (1) zur Ernte von Pflanzen, insbesondere von Getreide, umfassend
- mindestens ein Schneidorgan (2) zum Schneiden von Pflanzen,
- mindestens ein Förderorgan zur Förderung der geschnittenen Pflanzen in Richtung eines Verarbeitungsorgans (3) sowie
- mindestens ein Verarbeitungsorgan (3) zur Verarbeitung der geschnittenen Pflanzen,
wobei das Förderorgan mindestens einen Schrägförderer (4) umfasst, der mit einem Einzugskanal (5) ausgestattet ist, durch den hindurch geschnittene Pflanzen förderbar sind,
wobei der Einzugskanal (5) eine Mehrzahl von Seitenwandungen (6) aufweist, die einen Förderraum des Einzugskanals (5) umlaufend einfassen, sodass geschnittene Pflanzen ausgehend von einer vorderen offenen Stirnseite (8) des Einzugskanals (5) durch den Förderraum hindurch zu einer der vorderen Stirnseite (8) gegenüberliegenden hinteren offenen Stirnseite (9) des Einzugskanals (5) förderbar sind,
wobei mindestens eine Seitenwandung (6) des Einzugskanals (5) mindestens eine Verstärkungsstruktur (10) aufweist, in deren Bereich eine Wandstärke (11) der jeweiligen Seitenwandung (6) gegenüber Bereichen außerhalb der Verstärkungsstruktur (10) erhöht ist,
**dadurch gekennzeichnet, dass**
ein Verlauf der Verstärkungsstruktur (10) auf einem Ergebnis einer Topologieoptimierung basiert,
wobei zumindest eine von einer der Seitenwandungen (6) gebildete untere Bodenwandung (17) des Einzugskanals (5) mindestens eine Verstärkungsstruktur (10) aufweist,
wobei mindestens eine Verstärkungsstruktur (10) in einem Mittelbereich (7) der Bodenwandung (17) in Form einer in sich geschlossenen Ringstruktur (18) gebildet ist.

2. Erntemaschine (1) nach Anspruch 1, **dadurch gekennzeichnet, dass** der Verlauf und/oder die Anordnung mindestens einer Verstärkungsstruktur (10), vorzugsweise sämtlicher Verstärkungsstrukturen (10), unter Berücksichtigung einer Herstellbarkeit und/oder von Herstellungskosten optimiert ist.

3. Erntemaschine (1) nach Anspruch 1 oder 2, **dadurch gekennzeichnet, dass** der Verlauf mindestens einer Verstärkungsstruktur (10), vorzugsweise sämtlicher Verstärkungsstrukturen (10), in Abhängigkeit von sich ändernden Belastungszuständen optimiert ist.

4. Erntemaschine (1) nach einem der Ansprüche 1 bis 3, **dadurch gekennzeichnet, dass** die Verstärkungsstruktur (10) zumindest teilweise in solchen Bereichen der mindestens einen Seitenwandung (6) angeordnet sind, die einen überdurchschnittlichen Anteil an der Steifigkeit des Einzugskanals (5) haben.

5. Erntemaschine (1) nach einem der Ansprüche 1 bis 4, **dadurch gekennzeichnet, dass** die mindestens eine Seitenwandung (6) an zumindest einer Verstärkungsstruktur (10) zumindest bereichsweise mehrschichtig, insbesondere doppelschichtig, ausgebildet ist, wobei die Schichten (12, 13) in Kraft übertragender Weise miteinander verbunden sind.

6. Erntemaschine (1) nach einem der Ansprüche 1 bis 5, **dadurch gekennzeichnet, dass** eine erste Schicht (12) der Seitenwandung (6) von einem planen Blech und eine zweite Schicht (13) von einem geprägten Blech gebildet sind.

7. Erntemaschine (1) nach einem der Ansprüche 1 bis 6, **dadurch gekennzeichnet, dass** mindestens zwei Seitenwandungen (6) des Einzugskanals (5) unter Ausbildung einer Kante (14) aneinander grenzen, wobei mindestens eine Verstärkungsstruktur (10) an der Kante (14) von einer der Seitenwandungen (6) auf die jeweils angrenzenden Seitenwandung (6) umgeschlagen ist, wobei die Verstärkungsstruktur (10) vorzugsweise an der Kante (14) nach außen vorstehend ausgebildet ist.

8. Erntemaschine (1) nach einem der Ansprüche 1 bis 7, **dadurch gekennzeichnet, dass** eine Verstärkungsstruktur (10) in Form einer Lagerversteifung (15) ausgebildet ist, die in einem Lagerbereich (16) des Einzugskanals (5) angeordnet ist, wobei vorzugsweise die Lagerversteifung (15) von einer Seitenwandung (6) auf eine angrenzende Seitenwandung (6) des Einzugskanals (5) umschlägt.

9. Erntemaschine (1) nach den Ansprüchen 6 und 8, **dadurch gekennzeichnet, dass** die Lagerversteifung (15) von einem geprägten Blech gebildet ist, das gemeinsam mit einem weiteren Blech in Kraft übertragender Weise verbunden ist, sodass der Einzugskanal (5) im Bereich der Lagerversteifung (15) zumindest zweischichtig ausgebildet ist.

10. Erntemaschine (1) nach einem der Ansprüche 1 bis 9, **dadurch gekennzeichnet, dass** mindestens eine Verstärkungsstruktur (10) sich in Form einer Radialstruktur (19) radial ausgehend von der Ringstruktur (18) erstreckt, wobei sich vorzugsweise mindestens vier Radialstrukturen (19) ausgehend von der Ringstruktur (18) in Richtung jeweils einer Ecke (20) der Bodenwandung (17) erstrecken.

11. Erntemaschine (1) nach einem der Ansprüche 1 bis 10, **dadurch gekennzeichnet, dass** mindestens eine Verstärkungsstruktur (10) in Form einer randseitig an der Bodenwandung (17) umlaufenden Randstruktur (27) gebildet ist.

12. Erntemaschine (1) nach einem der Ansprüche 1 bis 11, **dadurch gekennzeichnet, dass** eine dem Förderraum zugewandte Innenseite (21) mindestens einer Seitwandung (6), vorzugsweise sämtlicher Seitenwandungen (6), eben ausgebildet ist.

13. Erntemaschine (1) nach einem der Ansprüche 1 bis 12, **dadurch gekennzeichnet, dass** eine dem Förderraum abgewandte Außenseite (22) mindestens einer Seitenwandung (6), vorzugsweise sämtlicher Seitenwandungen (6), im Bereich mindestens einer Verstärkungsstruktur (10), vorzugsweise sämtlicher Verstärkungsstrukturen (10), nach außen vorstehend ausgebildet ist.

14. Verfahren zur Konstruktion eines Einzugskanals (5) eines Schrägförderers (4) einer landwirtschaftlichen Erntemaschine (1), insbesondere einer solchen nach einem der vorherigen Ansprüche, umfassend die folgenden Verfahrensschritte:
a) Es wird ein virtuelles Modell des Einzugskanals (5) erstellt, wobei der Einzugskanal (5) eine Mehrzahl von Seitenwandungen (6) aufweist, die einen Förderraum des Einzugskanals (5) umlaufend einfassen.
b) Dem virtuellen Modell werden mindestens ein Bemessungsbelastungszustand sowie Lagerungsbedingungen vorgegeben.
c) An dem Modell wird unter dem Bemessungsbelastungszustand sowie den Lagerungsbedingungen eine Topologieoptimierung durchgeführt.
d) Basierend auf dem Ergebnis der Topologieoptimierung werden an dem Einzugskanal (5) Verstärkungsstrukturen (10) angeordnet, wobei zumindest eine von einer der Seitenwandungen (6) gebildete untere Bodenwandung (17) des Einzugskanals (5) mindestens eine Verstärkungsstruktur (10) aufweist, wobei mindestens eine Verstärkungsstruktur (10) in einem Mittelbereich (7) der Bodenwandung (17) in Form einer in sich geschlossenen Ringstruktur (18) gebildet ist.

15. Verfahren nach Anspruch 14, **dadurch gekennzeichnet, dass** die Topologieoptimierung mittels einer Finite-Elemente-Analyse durchgeführt wird, wobei vorzugsweise der Topologieoptimierung als Zielfunktion eine Maximierung der Steifigkeit des Einzugskanals (5) vorgegeben wird unter der Randbedingung, dass eine Masse des Einzugskanals (5) um einen festgelegten Faktor, insbesondere 70 % bis 90 %, verringert ist.

## Claims

1. An agricultural harvesting machine (1) for harvesting plants, in particular grain, comprising
- at least one cutting means (2) for cutting plants,
- at least one conveying means for conveying the cut plants in the direction of a processing means (3), as well as
- at least one processing means (3) for processing the cut plants,
wherein the conveying means comprises at least one inclined conveyor (4) which is equipped with an intake channel (5) through which cut plants can be conveyed,
wherein the intake channel (5) has a plurality of side walls (6) which circumferentially surround a conveying chamber of the intake channel (5) so that cut plants can be conveyed through the conveying chamber from an open front end face (8) of the intake channel (5) to an open rear end face (9) of the intake channel (5) which is opposite the front end face (8),
wherein at least one side wall (6) of the intake channel (5) has at least one reinforcing structure (10) in the region of which a wall thickness (11) of the respective side wall (6) is increased compared with regions outside the reinforcing structure (10),
**characterized in that**
a profile of the reinforcing structure (10) is based on a result of a topology optimization,
wherein at least one lower bottom wall (17) of the intake channel formed by one of the side walls (6) has at least one reinforcing structure (10),
wherein at least one reinforcing structure (10) is formed in the shape of a fully enclosed ring structure (18) in a central region (7) of the bottom wall (17).

2. The harvesting machine (1) according to claim 1, **characterized in that** the profile and/or the design of at least one reinforcing structure (10), preferably all of the reinforcing structures (10), is optimized with respect to manufacturability and/or with respect to manufacturing costs.

3. The harvesting machine (1) according to claim 1 or claim 2, **characterized in that** the profile of at least one reinforcing structure (10), preferably all of the reinforcing structures (10), is optimized as a function of varying load conditions.

4. The harvesting machine (1) according to one of claims 1 to 3, **characterized in that** at least a portion of the reinforcing structure (10) is disposed in those regions of the at least one side wall (6) which have an above-average proportion of the stiffness of the intake channel (5).

5. The harvesting machine (1) according to one of claims 1 to 4, **characterized in that** for at least one reinforcing structure (10), the at least one side wall (6) is constructed in multiple layers, in particular in two layers, at least in regions, wherein the layers (12, 13) are connected together in a force-transmitting manner.

6. The harvesting machine (1) according to one of claims 1 to 5, **characterized in that** a first layer (12) of the side wall (6) is formed by a flat sheet and a second layer (13) is formed by a stamped sheet.

7. The harvesting machine (1) according to one of claims 1 to 6, **characterized in that** at least two side walls (6) of the intake channel (5) border each other with the formation of an edge (14), wherein at least one reinforcing structure (10) at the edge (14) of one of the side walls (6) is turned over onto the respective bordering side wall (6), wherein preferably, the reinforcing structure (10) is configured to protrude outwards at the edge (14).

8. The harvesting machine (1) according to one of claims 1 to 7, **characterized in that** a reinforcing structure (10) is configured in the form of a bearing reinforcement (15) which is disposed in a bearing region (16) of the intake channel (5), wherein preferably, the bearing reinforcement (15) of one side wall (6) turns over onto a bordering side wall (6) of the intake channel (5).

9. The harvesting machine (1) according to claims 6 and 8, **characterized in that** the bearing reinforcement (15) is formed from a stamped sheet which is connected together with a further sheet in a force-transmitting manner, so that the intake channel (5) is configured with at least two layers in the region of the bearing reinforcement (15).

10. The harvesting machine (1) according to one of claims 1 to 9, **characterized in that** at least one reinforcing structure (10) extends radially outwards from the ring structure (18) in the form of a radial structure (19), wherein preferably, at least four radial structures (19) extend outwards from the ring structure (18) in the direction of a respective corner (20) of the bottom wall (17).

11. The harvesting machine (1) according to one of claims 1 to 10, **characterized in that** at least one reinforcing structure (10) is formed in the shape of an edge structure (27) running around the edge of the bottom wall (17).

12. The harvesting machine (1) according to one of claims 1 to 11, **characterized in that** a conveying chamber-facing inside (21) of at least one side wall (6), preferably all of the side walls (6), is flat in configuration.

13. The harvesting machine (1) according to one of claims 1 to 12, **characterized in that** an outside (22) facing away from the conveying chamber of at least one side wall (6), preferably all of the side walls (6), is configured to protrude outwards in the region of at least one reinforcing structure (10), preferably all of the reinforcing structures (10).

14. A method for constructing an intake channel (5) of an inclined conveyor (4) of an agricultural harvesting machine (1), in particular a machine according to one of the preceding claims, comprising the following steps of the method:
a) a virtual model of the intake channel (5) is generated, wherein the intake channel (5) has a plurality of side walls (6) which circumferentially surround a conveying chamber of the intake channel (5),
b) at least one design load condition as well as bearing conditions are specified to the virtual model,
c) a topology optimization is carried out on the model under the design load condition as well as the bearing conditions,
d) based on the result of the topology optimization, reinforcing structures (10) are disposed on the intake channel (5), wherein at least one lower bottom wall (17) of the intake channel (5) formed by one of the side walls (6) has at least one reinforcing structure (10), wherein at least one reinforcing structure (10) is formed in a central region (7) of the bottom wall (17) in the shape of a fully enclosed ring structure (18).

15. The method according to claim 14, **characterized in that** the topology optimization is carried out by means of a finite element analysis, wherein preferably, a maximization of the stiffness of the intake channel (5) is specified to the topology optimization as the target function under the boundary condition that a mass of the intake channel (5) is reduced by a set factor, in particular 70% to 90%.

## Revendications

1. Machine de récolte agricole (1) destinée à récolter des plantes, notamment des céréales, comprenant
- au moins un organe de coupe (2) destiné à couper des plantes,
- au moins un organe convoyeur destiné à transporter les plantes coupées en direction d'un organe de traitement (3), ainsi que
- au moins un organe de traitement (3) destiné à traiter les plantes coupées,
l'organe de convoyeur comprenant au moins un convoyeur incliné (4) qui est équipé d'un canal d'alimentation (5) à travers lequel peuvent être transportées les plantes coupées,
le canal d'alimentation (5) présentant une pluralité de parois latérales (6) qui entourent sur le pourtour un espace de convoyage du canal d'alimentation (5), de sorte que les plantes coupées, partant d'une face frontale avant (8) ouverte du canal d'alimentation (5), peuvent être transportées à travers l'espace de convoyage, vers une face frontale arrière (9) ouverte du canal d'alimentation (5), située en vis-à-vis de la face frontale avant (8),
au moins une paroi latérale (6) du canal d'alimentation (5) présentant au moins une structure de renforcement (10) dans la région de laquelle une épaisseur de paroi (11) de la paroi latérale (6) respective est augmentée par rapport à des régions à l'extérieur de la structure de renforcement (10),
**caractérisée en ce que**
une forme de la structure de renforcement (10) est basée sur un résultat d'une optimisation de topologie,
au moins une paroi de fond (17) inférieure du canal d'alimentation (5), qui est formée par l'une des parois latérales (6), présente au moins une structure de renforcement (10),
au moins une structure de renforcement (10) étant réalisée sous la forme d'une structure annulaire (18) fermée dans une zone centrale (7) de la paroi de fond (17).

2. Machine de récolte (1) selon la revendication 1, **caractérisée en ce que** la forme et/ou la disposition d'au moins une structure de renforcement (10), de préférence de l'ensemble des structures de renforcement (10), est optimisée en tenant compte d'une possibilité de fabrication et/ou de coûts de fabrication.

3. Machine de récolte (1) selon la revendication 1 ou 2, **caractérisée en ce que** la forme d'au moins une structure de renforcement (10), de préférence de l'ensemble des structures de renforcement (10), est optimisée en fonction d'états de charge variables.

4. Machine de récolte (1) selon une des revendications 1 à 3, **caractérisée en ce que** la structure de renforcement (10) est disposée au moins en partie dans les régions de la paroi latérale (6), au nombre d'au moins une, qui représentent une part supérieure à la moyenne de la rigidité du canal d'alimentation (5).

5. Machine de récolte (1) selon une des revendications 1 à 4, **caractérisée en ce que** la paroi latérale (6), au nombre d'au moins une, est réalisée en plusieurs couches, au moins par régions, notamment en double couche, sur au moins une structure de renforcement (10), les couches (12, 13) étant reliées entre elles de manière à transmettre des forces.

6. Machine de récolte (1) selon une des revendications 1 à 5, **caractérisée en ce qu'**une première couche (12) de la paroi latérale (6) est constituée d'une tôle plane, et une deuxième couche (13) est constituée d'une tôle estampée.

7. Machine de récolte (1) selon une des revendications 1 à 6, **caractérisée en ce qu'**au moins deux parois latérales (6) du canal d'alimentation (5) sont adjacentes l'une à l'autre en formant une arête (14), au moins une structure de renforcement (10) étant rabattue au niveau de l'arête (14) de l'une des parois latérales (6) sur l'autre paroi latérale (6) respective adjacente, la structure de renforcement (10) étant réalisée de préférence de manière à dépasser vers l'extérieur au niveau de l'arête (14).

8. Machine de récolte (1) selon une des revendications 1 à 7, **caractérisée en ce qu'**une structure de renforcement (10) est réalisée sous la forme d'un renfort de palier (15) qui est disposé dans une région de support (16) du canal d'alimentation (5), le renfort de palier (15) se rabattant de préférence d'une paroi latérale (6) sur une paroi latérale (6) adjacente du canal d'alimentation (5).

9. Machine de récolte (1) selon les revendications 6 et 8, **caractérisée en ce que** le renfort de palier (15) est constitué d'une tôle estampée qui est reliée conjointement avec une autre tôle, de manière à transmettre des forces, de sorte que le canal d'alimentation (5) est réalisé en au moins deux couches dans la région du renfort de palier (15).

10. Machine de récolte (1) selon une des revendications 1 à 9, **caractérisée en ce qu'**au moins une structure de renforcement (10) s'étend sous la forme d'une structure radiale (19) en partant radialement de la structure annulaire (18), sachant qu'au moins quatre structures radiales (19) s'étendent respectivement en direction d'un angle (20) de la paroi de fond (17), en partant de la structure annulaire (18).

11. Machine de récolte (1) selon une des revendications 1 à 10, **caractérisée en ce qu'**au moins une structure de renforcement (10) est réalisée sous la forme d'une structure de bord (27) s'étendant côté bord autour de la paroi de fond (17).

12. Machine de récolte (1) selon une des revendications 1 à 11, **caractérisée en ce qu'**une face interne (21), tournée vers l'espace de convoyage, d'au moins une paroi latérale (6), de préférence de l'ensemble des parois latérales (6), est réalisée sous une forme plane.

13. Machine de récolte (1) selon une des revendications 1 à 12, **caractérisée en ce qu'**une face externe (22), détournée de l'espace de convoyage, d'au moins une paroi latérale (6), de préférence de l'ensemble des parois latérales (6), est réalisée de manière à dépasser vers l'extérieur, dans la région d'au moins une structure de renforcement (10), de préférence de l'ensemble des structures de renforcement (10).

14. Procédé de conception d'un canal d'alimentation (5) d'un convoyeur incliné (4) d'une machine de récolte agricole (1), en particulier d'une machine selon une des revendications précédentes, comprenant les étapes de procédé suivantes :
a) un modèle virtuel du canal d'alimentation (5) est créé, le canal d'alimentation (5) présentant une pluralité de parois latérales (6) qui entourent sur le pourtour un espace de convoyage du canal d'alimentation (5),
b) au moins un état de charge nominal et des conditions de stockage étant prédéfinis pour le modèle virtuel,
c) une optimisation de topologie est réalisée sur le modèle, avec l'état de charge nominal et les conditions de stockage,
d) sur la base du résultat de l'optimisation de topologie, des structures de renforcement (10) sont disposées sur le canal d'alimentation (5), au moins une paroi de fond inférieure (17) du canal d'alimentation (5), qui est formée par une des parois latérales (6), présentant au moins une structure de renforcement (10), au moins une structure de renforcement (10) étant réalisée sous la forme d'une structure annulaire (18) fermée, dans une zone centrale (7) de la paroi de fond (17).

15. Procédé selon la revendication 14, **caractérisé en ce que** l'optimisation de topologie est réalisée à l'aide d'une analyse par éléments finis, une maximisation de la rigidité du canal d'alimentation (5) étant de préférence prédéfinie en tant que fonction cible pour l'optimisation de topologie, avec la condition marginale qu'une masse du canal d'alimentation (5) est réduite d'un facteur déterminé, notamment de 70 % à 90 %.
